Europäisches Patentamt

European Patent Office

Office européen des brevets

(11) Veröffentlichungsnummer: **0 032 119**
A1

(12) **EUROPÄISCHE PATENTANMELDUNG**

(21) Anmeldenummer: **81100057.9**

(22) Anmeldetag: **07.01.81**

(51) Int. Cl.³: **B 66 F 7/00**
**B 60 P 1/44, G 01 G 5/04**

(30) Priorität: 08.01.80 DE 3000492
08.01.80 DE 3000493
12.11.80 DE 3042656

(43) Veröffentlichungstag der Anmeldung:
15.07.81 Patentblatt 81/28

(84) Benannte Vertragsstaaten:
AT BE CH IT LI NL

(71) Anmelder: Hillesheimer, Walter, Dipl.-Ing. Dr.
Hans-Böckler-Strasse 11
D-6078 Neu-Isenburg(DE)

(72) Erfinder: Hillesheimer, Walter, Dipl.-Ing. Dr.
Hans-Böckler-Strasse 11
D-6078 Neu-Isenburg(DE)

(74) Vertreter: Wey, Hans-Heinrich, Dipl.-Ing. et al,
Patentanwälte Müller-Börner Wey & Körner
Widenmayerstrasse 49
D-8000 München 22(DE)

(54) **Hydraulisch betriebene Hebe-, Verlade- oder Kippbühne.**

(57) Hydraulisch betriebene Hebe-, Verlade- bzw. Kippbühne od. dgl. mit einer die Last (33) aufnehmenden Plattform, (17) welche mittels wenigstens eines hydraulischen Arbeitszylinders (25) und gegebenenfalls eines Hebelgetriebes, insbesondere Scherenhebelgetriebes od. dgl. in vorzugsweise horizontaler Lage heb- und senkbar bzw. kippbar ist wobei der bzw. die hydraulischen Arbeitszylinder (25) über eine ein Absperr- bzw. Umschaltorgan (28, 32) enthaltende Leitung mit einer das Gewicht einer auf der Plattform (17) aufliegenden Last (33) ermittelnden und anzeigenden Meßeinrichtung mit Anzeigeinstrument (26) verbunden ist, dessen in Gewichtseinheiten unterteilte Skala derart eingestellt oder einstellbar ist, daß bei einer vorbestimmten Hub- und Wiegehöhe der unbelasteten Plattform (17) der Nullpunkt der Skala des Anzeigeinstruments (26) mit der Stellung des Zeigers übereinstimmt.

FIG. 1

EP 0 032 119 A1

Dipl.-Ing. Dr. Walter Hillesheimer
6078 Neu-Isenburg

Hydraulisch betriebene Hebe-, Verlade- oder
Kippbühne

Die Erfindung betrifft eine hydraulisch betriebene Hebe-, Verlade- bzw. Kippbühne od.dgl. mit einer die Last aufnehmenden Plattform, welche mittels wenigstens eines hydraulischen Arbeitszylinders und - je nach der Konstruktion der Bühne - eines Hebelgetriebes, insbesondere Scherenhebelgetriebes od.dgl. heb- und senkbar bzw. kippbar ist und bei welcher im hydraulischen Kreislauf Schaltelemente zur Zu- und Abfuhr hydraulischer Flüssigkeit zum bzw. vom Arbeitszylinder angeordnet sind.

Hebebühnen der zuvor beschriebenen Art dienen dazu, Lasten von einem niedrigeren Niveau auf ein höheres Niveau anzuheben, beispielsweise auf das Niveau einer Ladeplattform eines Fahrzeugs, um so das Fahrzeug mit der Last einfacher und leichter beladen zu können. Entsprechendes gilt für das Entladen von Fahrzeugen bzw. für das Verbringen einer Last auf ein tieferes Niveau. Soweit das Gewicht zu transportierender Lasten bestimmt werden muß, erfolgt dies bisher üblicherweise mit Hilfe spezieller separater Waagen bzw. Wiegeeinrichtungen im Rahmen eines besonderen Arbeitsganges. Mangels solcher Einrichtungen wird oftmals das Gewicht der Lasten geschätzt und dabei häufig erheblich verschätzt.

Der Erfindung liegt die Aufgabe zugrunde, die hydraulisch betriebenen Hebe-, Verlade- bzw. Kippbühnen od.dgl. der in Betracht kommenden Art in der Weise auszubilden bzw. auszurüsten, daß mit ihrer Hilfe im Rahmen eines ohnehin notwendigen Ladevorganges beim Heben oder Senken oder Überrollen das Gewicht der auf der Plattform der Bühne befindlichen Last zumindest mit einer für die Praxis als ausreichend anzusehenden Genauigkeit bestimmbar ist, um so für viele Fälle einen separaten und damit umständlichen Wiegevorgang und die dafür notwendige Einrichtung einzusparen.

Zur Lösung dieser Aufgabe wird gemäß der Erfindung vorgeschlagen, die fraglichen Bühnen in der Weise auszubilden bzw. auszurüsten, daß der hydraulische Arbeitszylinder oder eine der mit ihm verbundenen hydraulischen Leitungen über eine ein Absperr- bzw. Umschaltorgan enthaltende Leitung mit einer das Gewicht einer auf der Plattform aufliegenden Last anzeigenden Meßeinrichtung mit Anzeigeinstrument verbunden ist, dessen in Gewichtseinheiten unterteilte Skala derart eingestellt oder einstellbar ist, so daß bei einer vorbestimmten Hub- und Wiegehöhe und bei unbelasteter Plattform der Nullpunkt der Skala des Meß- und Anzeigeinstruments mit der Stellung des Zeigers übereinstimmt, und daß in der hydraulischen Zufluß- und bzw. oder Abflußleitung des Arbeitszylinders ein den Stillstand der Plattform in der zum Wiegen vorbestimmten Hubhöhe bewirkendes Absperrorgan angeordnet ist.

Eine derart ausgebildete bzw. ausgerüstete Bühne ermöglicht es, das Gewicht einer auf der Plattform aufliegenden Last in einfacher, rationeller Weise während ihres Transports bzw. des Ladebetriebs mit ausreichender Genauigkeit festzustellen bzw. zu kontrollieren.

Das Wiegen der Last auf Scherenhebebühnen od.dgl. erfolgt zweckmäßigerweise deshalb in vorbestimmter Hubhöhe der Plattform, da in dieser Lage die Gestänge des Hebelgetriebes stets die gleiche Lage, insbesondere Winkellage, zueinander einnehmen und der im hydraulischen System herrschende Druck bei unbelasteter Plattform stets der gleiche ist. Vorteilhafterweise erfolgt die Gewichtsbestimmung der Last bei einer solchen Hubhöhe der Plattform, bei welcher die Druckverlaufskurve beim Heben oder Senken der Plattform bzw. die an sie angelegte Tangente eine möglichst horizontale Lage einnehmen. Das Wiegen der Last kann während ihres Hebens oder Senkens erfolgen; um aber möglicherweise.die Genauigkeit beeinflussende Faktoren auszuschalten, erfolgt das Wiegen vorzugsweise bei abgeschaltetem Hydraulikkreislauf, so daß eine weitgehend exakte Messung des Drucks der Hydraulikflüssigkeit im relevanten Abschnitt des Hydraulikkreislaufs erfolgen kann, welcher einen Wert für das jeweilige Gewicht der zu wiegenden Last darstellt. Die Skala des Meß- und Anzeigeinstruments ist hinsichtlich der Wiegeposition der Hebebühne entsprechend eingeteilt und so einstellbar, daß das Gewicht der jeweils zu wiegenden Last unmittelbar anhand der Zeigerstellung auf der Skala ablesbar ist. Entsprechendes gilt hinsichtlich digitaler Anzeigeinstrumente. Die Anzeigeinstrumente können direkt an geschützter Stelle unter der Plattform montiert oder an anderer geeigneter Stelle fern der Hebebühne angebracht sein.

Je nach den gewünschten Anforderungen können an sich bekannte Hilfseinrichtungen vorgesehen sein, um die Meßgenauigkeit zu vergrößern oder für Meßzwecke den Druck der Hydraulikflüssigkeit entweder zu verstärken oder abzuschwächen u.dgl. Auch ist es möglich, zwei oder mehr Meß- und Anzeigeinstrumente vorzusehen, die für unterschiedliche Lastbereiche vorgesehen sind.

Zweckmäßigerweise sind an dem Gestänge des Hebelgetriebes vorzugsweise einstellbare Schaltelemente angeordnet, welche den Stillstand der Plattform in der gewünschten Hub- bzw. Wiegehöhe der Plattform und gegebenenfalls auch das Einschalten des Meß- und Anzeigeinstruments bewirken.

Beim Wiegen mit einer Hebebühne der vorgenannten Art kann es jedoch aufgrund von Reibungseffekten zu Meßungenauigkeiten kommen, wenn die Plattform der Hebebühne aus einer Abwärtsbewegung zum Zwecke des Messens zum Stillstand gebracht worden ist. Solche Ungenauigkeiten stellen sich besonders dann ein, wenn aufgrund längeren Gebrauchs der Hebebühne die Lager und Gelenke der beweglichen Teile ausgeschlagen sind, weil es dann zu Klemmwirkungen kommen kann, die den zum Halten der Last notwendigen und zwecks Gewichtsbestimmung zu messenden Hydraulikdruck verändern.

Um die erfindungsgemäß ausgebildete bzw. ausgerüstete hydraulische Hebebühne weiterhin zu verbessern, insbesondere um noch gleichmäßigere und genauere Resultate bei der Ermittlung des Gewichts der auf der Plattform der Hebebühne aufliegenden Last zu erhalten, und zwar in einer kürzestmöglichen Zeitspanne, wobei die vorgenannten, die Meßergebnisse beeinflussenden Faktoren weitestgehend ausgeschaltet sein sollen, wird vorgeschlagen, daß in den Hydraulikkreislauf eine Kompensationsvorrichtung eingeschaltet ist, welche aus einem hydraulischen Zylinder mit durch einen Kolben in zwei Kammern unterteiltem Innenraum besteht, von welchen die eine Kammer vom hydrostatischen Druck der hydraulischen Flüssigkeit in dem oder den Arbeitszylindern und die andere Kammer vom Druck der hydraulischen, von der Pumpe bis zum Erreichen des Gleichgewichtszustands geförderten Flüssigkeit beaufschlagt ist.

Die Erfindung beruht auf der Vorstellung, daß man die vorerwähnten negativen Einflüsse dann weitestgehend ausschalten kann, wenn man die Messung in einem Zustand durchführt, in welchem sich die Plattform gerade in jenem Zustand befindet, in welchem sie ihre Lage in Richtung auf ein Anheben verlassen möchte, sie also gleichsam allein auf dem Hydrauliköl "schwimmt", so daß meßwertverfälschende Reibungseffekte weitgehend eliminiert sind.

Weiterhin wird vorgeschlagen, zwischen dem hydraulischen System, in welchem sich nach Absperren der von der Pumpe zu dem bzw. den Arbeitszylindern geförderten hydraulischen Flüssigkeit ein bestimmter hydrostatischer Druck einstellt, und der Meßeinrichtung eine Stabilisierungskammer anzuordnen.

Weitere Einzelheiten und Merkmale der erfindungsgemäß ausgebildeten Hebebühne gehen aus den Unteransprüchen und der nachfolgenden Beschreibung hervor.

In den Figuren 1 bis 4 der Zeichnung ist der Gegenstand der Erfindung anhand eines bevorzugten Ausführungsbeispiels dargestellt, welches nachstehend im einzelnen näher beschrieben ist. Es zeigen:

Fig. 1   eine Seitenansicht einer erfindungsgemäß ausgebildeten bzw. ausgerüsteten hydraulischen Scherenhebebühne;

Fig. 2   und 3 je einen hydraulischen Kreislauf der Scherenhebebühne nach Fig. 1 in schematischer Darstellung;

Fig. 4   eine Seitenansicht einer kippbar gelagerten Verlade- bzw. Kippbühne od.dgl.

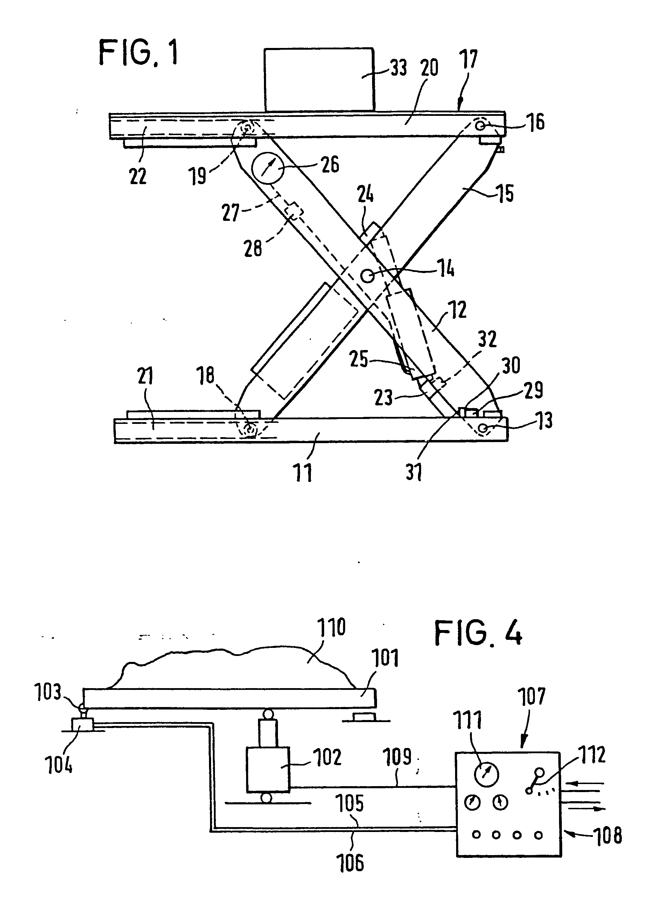

Die Bauart der in Fig. 1 dargestellten hydraulischen Scherenhebebühne entspricht der üblichen. An einem Grundgestell 11 sind die Hebelarme 12 mit ihrem einen unteren Ende um die Achse 13 schwenkbar gelagert. Die etwa auf halber Länge mittels einer Achse 14 mit den Hebelarmen 12 schwenkbar verbundenen Hebelarme 15 sind mit ihrem oberen Ende auf der Achse 16 der die Lasten aufnehmenden Plattform 17 gelagert. Am unteren Ende der Hebelarme 15 und am oberen Ende der Hebelarme 12 angeordnete Rollen 18 bzw. 19 greifen in am Grundgestell 11 bzw. am Rahmen 20 der Plattform 17 befindliche Führungsschienen 21 bzw. 22 ein, längs welcher sie vor und zurück bewegbar sind. Zwischen der an den beiden Hebelarmen 12 der Hebebühne befindlichen Traverse 23 und der die beiden Hebelarme 15 miteinander verbindenden Traverse 24 sind zwei Hydraulikzylinder 25 angeordnet, mittels welcher die Plattform 17 heb- und senkbar ist, wobei das aus den Hebelarmen 12 und 15 und den entsprechenden Verbindungs- und Führungsmitteln gebildete Scherenhebelgetriebe für eine stets horizontale Lage der Plattform 17 sorgt.

Beispielsweise an einem der Hebelarme 12 ist das Meß- und Anzeigeinstrument 26 angeordnet, welches über eine hydraulische Leitung 27 mit den Arbeitszylindern 25 verbunden ist, in welcher sich zweckmäßigerweise ein vorzugsweise elektromagnetisch betätigbares Absperrventil 28 befindet. An dem Grundgestell 11 ist ein elektrischer Schalter 29 angeordnet, dessen Schaltarm 30 von einem einstellbaren Nocken 31 am Hebelarm 12 des Scherenhebelgetriebes betätigt wird, um in einer bestimmten Winkellage der Hebelarme 12 bzw. 15 die Zufuhr hydraulischer Flüssigkeit zu den Arbeitszylindern 25 mit Hilfe eines vom elektrischen Schalter 29 gesteuerten Ventils 32 zu unterbrechen und das Ventil 28 zu öffnen, so daß das Meß- und Anzeigeinstrument 26 eingeschaltet und vom statischen Druck der Hydraulikflüssigkeit in den Arbeitszylindern 25 beaufschlagt wird, so daß dann das Gewicht der auf der Plattform 17 ruhenden Last 33 angezeigt wird und abgelesen werden kann.

Auf die Hubhöhe der Plattform 17, in welcher das Wiegen der Last 33 erfolgt, ist die Skala des Meß- und Anzeigeinstruments 26 derart eingestellt, daß deren Nullpunkt mit der Zeigerstellung in dieser Lage der Plattform 17 der Hebebühne übereinstimmt. Die Skaleneinteilung ist für diese Position derart, daß das Gewicht einer jeden Last 33 unmittelbar auf der Skala ablesbar ist.

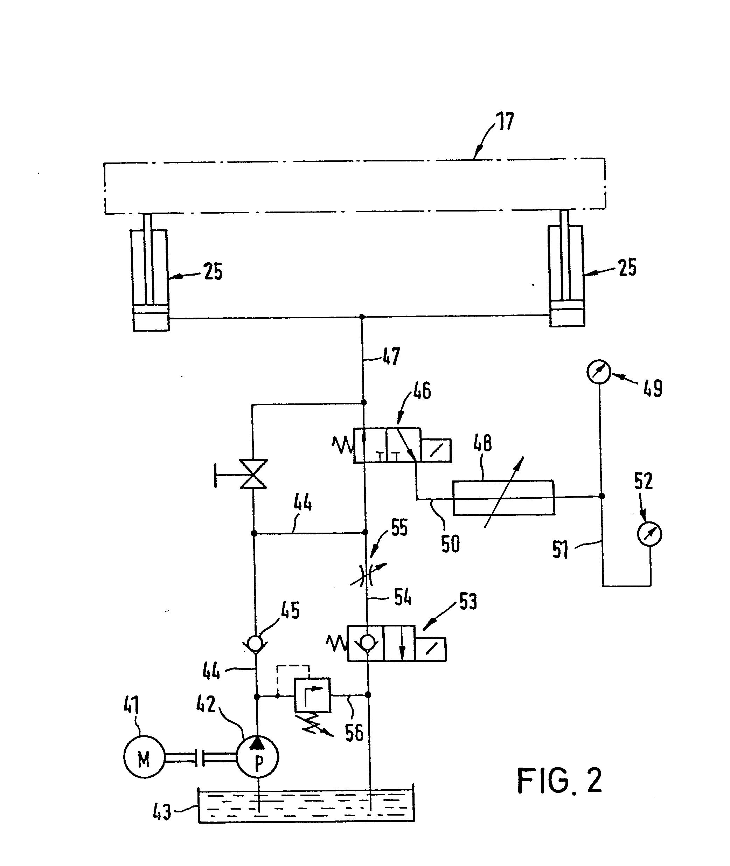

Wie aus Fig. 2 hervorgeht, fördert die von einem Motor 41 angetriebene Pumpe 42 aus dem Vorratsbehälter 43 angesaugte Flüssigkeit unter Druck über die Leitung 44, in welchem sich ein Rückschlagventil 45 und ein Absperr- und Schaltventil 46 befinden, in die Arbeitszylinder 25 der Hebebühne. Die von der Druckflüssigkeit bewegten Kolben im Arbeitszylinder bewirken ein Anheben der Plattform 17 der Hebebühne. Bei Erreichen einer vorbestimmten Hubhöhe der Plattform 17 wird die Förderleitung 44 durch das Ventil 46 automatisch abgesperrt. Mittels des Absperr- und Schaltventils 46 ist die Druckflüssigkeitsleitung 47 mit der Meßeinrichtung 48 und dem Anzeigeinstrument 49 über die Leitung 50 verbindbar. Über die Leitung 51 kann gegebenenfalls ein weiteres Anzeigeinstrument 52 an die Meßeinrichtung 48 angeschlossen sein.

Nach erfolgter Gewichtsbestimmung der auf der Plattform 17 aufliegenden Last wird das Ventil 46 wieder geöffnet, um die Plattform 17 auf die gewünschte Endhubhöhe zu drücken. Ist diese erreicht, wird das Ventil 46 geschlossen, um die Plattform 17 auf der erreichten Höhe zu halten. Um die Plattform 17 abzusenken, werden das Ventil 46 und das Absperrorgan 53 in der Verbindungsleitung 54 zwischen dem Ventil 46 und dem Flüssigkeitsvorratsbehälter 43, in welcher sich noch die einstellbare Drossel 55 befindet, geöffnet. Bei abgesperrter Förderleitung 44 wird die von der Pumpe 42 geförderte Druckflüssigkeit über eine Verbindungsleitung 56 zwischen der Förderleitung 44 und der Rückflußleitung 55 in den Flüssigkeitsvorratsbehälter 43 zurückgeführt.

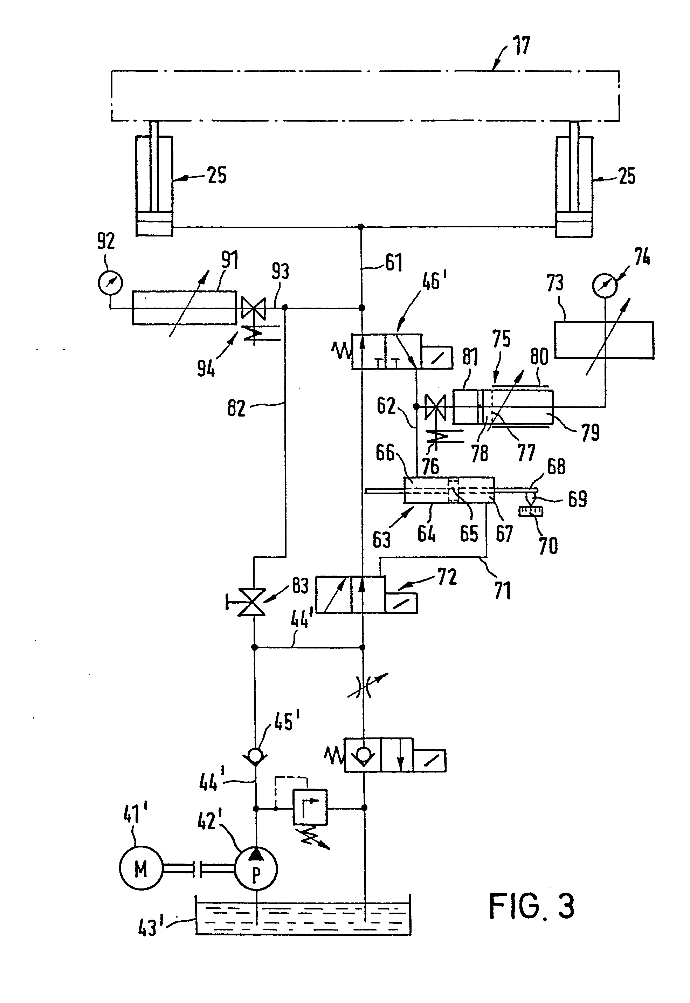

Die Anordnung nach Fig. 3 entspricht im wesentlichen derjenigen nach Fig. 2; sie enthält jedoch noch einige, die Meßgenauigkeit fördernde Elemente, die nachstehend näher beschrieben sind.

Wie aus Fig. 3 ersichtlich, verbindet das Absperr- und Umschaltventil 46' nach Absperrung der Leitung 44' die zu den Arbeitszylindern 25 führende Leitung 61 über eine Leitung 62 mit einer Kompensationsvorrichtung 63. Diese besteht vorzugsweise aus einem hydraulischen Zylinder 64, in welchem sich Kolben 65 befindet, der den Innenraum des Zylinders 64 in eine erste Kammer 66 und eine zweite Kammer 67 unterteilt. Der Kolben 65 ist mit einer durch die Zylinderdeckel herausgeführten durchgehenden Kolbenstange 68 verbunden, an deren einem Ende ein Schaltnocken 69 angeordnet ist, der eine Schaltvorrichtung 70 betätigen kann. Die Verbindungsleitung 62 zwischen dem Absperr- und Umschaltventil 46' und der Kompensationsvorrichtung 63 mündet in die erste Zylinderkammer 66 der Kompensationsvorrichtung 63. Eine in die zweite Zylinderkammer 67 mündende Leitung 71 ist über ein Absperr- und Umschaltventil 72 mit der Förderleitung 44' verbunden. Günstigerweise ist in der Leitung 71 eine (nicht dargestellte) Drosselstelle angeordnet, die ein weiches Arbeiten der Kompensationsvorrichtung 63 gewährleistet. Die Verbindungsleitung 62 weist eine Abzweigung auf, an welcher der zur Gewichtsbestimmung verwendete Hydraulikdruck abgenommen wird.

Zwischen der vorerwähnten Abzweigung an der Verbindungsleitung 62 und einer Meßeinrichtung 73 mit Anzeigeinstrument 74 und gegebenenfalls vorgeschaltetem Verzögerungsglied befindet sich eine Stabilisierungskammer 75, in deren Zuleitung sich vorzugsweise noch ein elektromagnetisch betätigbares Absperrventil 76 befindet. Der Innenraum der Stabilisierungskammer 75 ist mittels einer Membran 77 in zwei Kammern 78, 79 unterteilt. Um die in der Stabilisierungskammer befindliche Hydraulikflüssigkeit auf stets gleichem Temperaturniveau zu halten, ist die Stabilisierungskammer von einem Heizmantel 80 umgeben. Die Stabilisierungskammer 75 ist dazu bestimmt, Wirbel u.dgl. Störeinflüsse zu beseitigen. Ihr ist vorteilhafterweise eine an sich bekannte, Dämpfungselemente enthaltende Kammer 81 vorgeschaltet.

Zum Zwecke der Gewichtsbestimmung wird das Ventil 46' umgeschaltet. Dadurch wird die Leitung 61 von der Förderleitung 44' abgesperrt und werden die Verbindungsleitungen 62 und die erste Zylinderkammer 66 der Kompensationsvorrichtung 63 von der Leitung 61 her mit dem in den Arbeitszylindern 25 herrschenden Druck beaufschlagt. Dadurch wird der Kolben 65 im Zylinder 64 nach rechts bewegt. Gesteuert durch den Schaltnocken 69 wird nun das Ventil 72 umgeschaltet, so daß über die Verbindungsleitung 71 von der Druckleitung 44' her Druckflüssigkeit in die zweite Zylinderkammer 67 geleitet wird, und zwar so lange, bis der Kolben 65 wieder seine Mittelstellung erreicht hat. Der Schaltnocken 69 schaltet dann die Pumpe 42' aus. Das Ausschalten der Pumpe 42' kann unter Berücksichtigung eines geringen Nachlaufens der Pumpe gegebenenfalls auch geringfügig vor dem Erreichen der Mittelstellung des Kolbens 65 erfolgen. Durch die Rückbewegung des Kolbens 65 wird eine geringe Menge Hydraulikflüssigkeit aus der ersten Zylinderkammer 66 des Zylinders 64 der Kompensationsvorrichtung 63 in Richtung Arbeitszylinder 25 zurückgedrückt, wodurch die Reibungsarbeit in den Gelenken der Hebebühne weitgehend kompensiert wird, d.h. die Plattform in den erwähnten "schwimmenden" Zustand versetzt wird. Die Kompensationsvorrichtung 63 arbeitet gleichsam wie eine hydraulische Waage.

In dem Augenblick, in welchem in der Kompensationsvorrichtung 63 der Gleichgewichtszustand hergestellt ist, wird, gesteuert durch den Schaltnocken 69, das Ventil 76 in der Verbindungsleitung zu der Stabilisierungskammer 75 bzw. zu der dieser gegebenenfalls vorgeschalteten Dämpfungskammer 81 geöffnet. Es erfolgt nun die Messung. Die Messung kann durch ein Verzögerungsglied gegebenenfalls verzögert werden, um sie erst dann vorzunehmen, wenn sich die Hydraulikflüssigkeit im Meßkreis eine gewisse Zeitspanne nach Öffnen des Absperrventils 76 beruhigt hat.

Die Kompensationsvorrichtung braucht nicht notwendigerweise aus einem Zylinder mit unterteiltem Innenraum zu bestehen; sie kann jede andere geeignete Form haben.

Vorteilhafterweise ist in dem Hydraulikkreislauf eine Vorrichtung angeordnet, die es ermöglicht, nach dem Anhalten der Plattform 17 diese geringfügig abzusenken, bevor die Kompensationsvorrichtung 63 eingeschaltet wird. Dadurch werden auch etwaige, die Meßergebnisse beeinträchtigende Faktoren, die davon bestimmt sind, von welcher Seite aus die Plattform an die Meßhöhe herangefahren worden ist, eliminiert.

Nach erfolgter Gewichtsbestimmung der auf der Plattform 17 aufliegenden Last werden die Ventile 46' und 72 durch einen von außen zugeführten Steuerbefehl wieder geöffnet, um die Plattform 17 auf die gewünschte Endhubhöhe zu bringen, d.h. sie weiter zu heben oder abzusenken.

Eine weitere Steigerung der Meßgenauigkeit läßt sich erreichen, wenn vor dem Betrieb der Hebebühne das Hydrauliköl im Hydraulikkreislauf eine vorbestimmte Zeitspanne umgewälzt wird, zu welchem Zweck eine zweite, bis fast an die Arbeitszylinder reichende Spülleitung 82 vorgesehen ist, die durch ein Ventil 83 absperrbar ist.

Weiterhin kann zusätzlich eine Meßeinrichtung 91 mit Anzeigeinstrument 92 vorgesehen sein, welche über die Verbindungsleitung 93 an das Hydrauliksystem angeschlossen ist. Diese Leitung 93 ist mittels eines Elektromagnetventils 94 absperrbar, welches vorzugsweise nur in dem Augenblick geöffnet wird, in welchem eine Messung erfolgen soll. Diese Meßeinrichtung kann zur groben Bestimmung des herrschenden Hydraulikdrucks oder auch - bei Berücksichtigung weiterer Kriterien - zur Grobbestimmung des Gewichts der auf der Plattform befindlichen Last verwendet werden.

Fig. 4 bezieht sich auf eine neigbare Verlade- bzw. Kippbühne od.dgl., deren Plattform 101 mittels des Arbeitszylinders 102 um die horizontale Kippachse 103 schwenkbar ist.
Die Kippachse 103 ist mittels wenigstens eines Hydraulikzylinders 104 abgestützt und mit den hydraulischen Leitungen
105 bzw. 106 mit einer Schalt- und Meßeinrichtung 107 verbunden, welche in dem Schaltschrank 108 untergebracht ist.
Die Meßeinrichtung 107 ist gleichfalls mit der zum Arbeitszylinder 102 führenden hydraulischen Leitung 109 verbunden,
um das Gewicht einer auf der Plattform 101 aufliegenden Last
110 zu ermitteln und mit Hilfe des Anzeigeinstruments 111
anzuzeigen. Mit Hilfe des Schalthebels 112 läßt sich die
Plattform 101 mit der Last 110 anheben, die Last wiegen und
die Plattform wieder absenken sowie die Plattform in jede
gewünschte Kipplage bringen.

Wie erwähnt, lassen sich hydraulisch betriebene Hebe-,
Verlade- oder Kippbühnen unterschiedlichster Bauart in der
erfindungsgemäßen Weise ausbilden bzw. ausrüsten. Es ist aber
auch möglich, dies hinsichtlich der an Kraftfahrzeugen befindlichen kippbaren Ladebordwände vorzusehen, welche mittels
wenigstens zweier in diesen angeordneten hydraulischen Zylinder bewegbar sind, um mit deren Hilfe Lasten auf- bzw. abzuladen. Zum Zwecke der Gewichtsermittlung dieser Lasten sind
die beiden hydraulischen Zylinder über mit einem Absperrventil versehene Leitungen mit einer Meßeinrichtung mit
Anzeigeinstrument verbunden, wobei die Anordnung alle wesentlichen Elemente aufweist, die eine rasche Gewichtsermittlung
ermöglichen.

Die erfindungsgemäß ausgebildete Bühne hat sich, wie Versuche
in der Praxis gezeigt haben, im Rahmen des Anwendungszwecks
hervorragend bewährt. Ohne besonderen Arbeitsgang kann bei
Verladearbeiten das Gewicht der in Betracht kommenden Lasten
ermittelt werden, um es entweder bei Gewichtsangaben für den weiteren Transport oder für Kontrollzwecke verwerten zu können.

Überdies kommt aber dem Gegenstand der Erfindung auch eine Sicherheitsfunktion insoweit zu, als das mit ausreichender Genauigkeit ermittelte Gewicht einer Last einen Anhaltspunkt für die Verwendung von Hebezeugen und Transportgeräten während der weiteren Behandlung der Last abgibt, so daß die Gefährdung von Gerät und Personal durch Überbelastung und Schaden vermeidbar ist. Dies trifft besonders bei sperrigen Gütern, z.B. im Maschinen- und Apparatebau zu, wo oft überhaupt kaum Waagen über 100 kg vorhanden sind und schon der Transport zur Hebebühne gefahrvoll ist.

Patentansprüche

1. Hydraulisch betriebene Hebe-, Verlade- bzw. Kippbühne od.dgl. mit einer die Last aufnehmenden Plattform, welche mittels wenigstens eines hydraulischen Arbeitszylinders und gegebenenfalls eines Hebelgetriebes, insbesondere Scherenhebelgetriebes od.dgl. in vorzugsweise horizontaler Lage heb- und senkbar bzw. kippbar ist und bei welcher im hydraulischen Kreislauf Schaltelemente zur Zu- und Abfuhr hydraulischer Flüssigkeit zum bzw. vom Arbeitszylinder angeordnet sind, dadurch gekennzeichnet, daß der bzw. die hydraulischen Arbeitszylinder (25) oder eine der mit ihnen verbundenen hydraulischen Leitungen (47;61) über eine ein Absperr- bzw. Umschaltorgan (46) enthaltende Leitung (50) mit einer das Gewicht einer auf der Plattform (17) aufliegenden Last (33) ermittelnden und anzeigenden Meßeinrichtung (48;73) mit Anzeigeinstrument (26;49;74) verbunden ist, dessen in Gewichtseinheiten unterteilte Skala derart eingestellt oder einstellbar ist, daß bei einer vorbestimmten Hub- und Wiegehöhe der unbelasteten Plattform (17) der Nullpunkt der Skala des Anzeigeinstruments (26;49;74) mit der Stellung des Zeigers übereinstimmt, und daß in der hydraulischen Zufluß- und bzw. oder Abflußleitung (44,47;61) des oder der Arbeitszylinder (25) ein den Stillstand der Plattform (17) in der zum Wiegen vorbestimmten Hubhöhe bewirkendes Absperrorgan (46) angeordnet ist.

2. Bühne nach Anspruch 1, dadurch gekennzeichnet, daß in den Hydraulikkreislauf eine Kompensationsvorrichtung (63) eingeschaltet ist, welche aus einem hydraulischen Zylinder (64) mit durch einen Kolben (65) in zwei Kammern (66,67) unterteiltem Innenraum besteht, von welchen die eine Kammer (66) vom hydrostatischen Druck der hydraulischen Flüssigkeit in dem oder den Arbeitszylindern (25) und die andere Kammer (67) vom Druck der hydraulischen, von der Pumpe (42') bis zum Erreichen eines Gleichgewichtszustands ("schwimmender" Zustand) geförderten Flüssigkeit beaufschlagt ist.

3. Bühne nach Anspruch 2, dadurch gekennzeichnet, daß der Kolben (65) im hydraulischen Zylinder (64) der Kompensationsvorrichtung (63) eine nach beiden Seiten durch die Zylinderdeckel hindurchgeführte Kolbenstange (68) aufweist, mittels welcher Schaltelemente (70) für die Steuerung von Ventilen bzw. Schiebern des Hydraulikkreislaufs betätigbar sind.

4. Bühne nach Anspruch 2 oder 3, dadurch gekennzeichnet, daß zwischen dem hydraulischen System, in welchem sich nach Absperren der von der Pumpe (42') zu dem bzw. den Arbeitszylindern (25) geförderten hydraulischen Flüssigkeit ein bestimmter hydrostatischer Druck einstellt, und der Meßeinrichtung (73) eine Stabilisierungskammer (75) angeordnet ist.

5. Bühne nach Anspruch 4, dadurch gekennzeichnet, daß die Stabilisierungskammer (75) mittels einer Membran (77) oder eines frei beweglichen Kolbens in zwei Kammern (78,79) unterteilt ist.

6. Bühne nach Anspruch 5, dadurch gekennzeichnet, daß die die Stabilisierungskammer (75) unterteilende Membran (77) oder der Kolben vorzugsweise in unmittelbarer Nähe der Mündung der Verbindungsleitung angeordnet ist.

7. Bühne nach Anspruch 5, dadurch gekennzeichnet, daß die Stabilisierungskammer (75) mit einem Heizmantel (80) ausgestattet ist.

8. Bühne nach Anspruch 5, 6 oder 7, dadurch gekennzeichnet, daß der Stabilisierungskammer (75) eine Dämpfungselemente enthaltende Kammer (81) vorgeschaltet ist.

9. Bühne nach einem oder mehreren der Ansprüche 1 bis 8, gekennzeichnet durch ein im Hydraulikkreislauf angeordnetes, nach dem Stillstand der Plattform (17) für eine vorbestimmte Zeitspanne zur minimalen Absenkung der Plattform (17) öffnendes, mit einer regelbaren Durchtrittsöffnung versehenes Absperrorgan.

10. Bühne nach einem oder mehreren der Ansprüche 1 bis 9, gekennzeichnet durch ein die Meßeinrichtung nach dem Stillstand der Plattform (17) verzögert einschaltendes Verzögerungsglied.

11. Bühne nach einem oder mehreren der Ansprüche 1 bis 10, dadurch gekennzeichnet, daß an dem Gestänge (12,15) des Hebelgetriebes den Stillstand der Plattform (17) und gegebenenfalls das Einschalten der Meßeinrichtung (48;73) und der Anzeigeinstrumente (26;49;74) bewirkende einstellbare Schaltelemente (29,30,31) angeordnet sind.

12. Bühne nach einem oder mehreren der Ansprüche 1 bis 11, dadurch gekennzeichnet, daß mehrere ein- und abschaltbare Anzeigeinstrumente für unterschiedliche Gewichtsbereiche vorgesehen sind.

13. Verlade- bzw. Kippbühne od.dgl. nach einem oder mehreren der Ansprüche 1 bis 12, dadurch gekennzeichnet, daß die Kippachse (103) der Plattform (101) während des Wiegevorgangs der auf der Plattform (101) aufliegenden Last (110) mittels wenigstens eines gleichfalls mit der Meßeinrichtung (107) verbundenen hydraulischen Zylinders (104) abgestützt ist, welcher über eine mit einem Absperrventil versehene Leitung (106) mit der Meßeinrichtung (107) verbunden ist.

14. Ladebühne nach einem oder mehreren der Ansprüche 1 bis 12 in Form einer heb- und senk- sowie kippbaren Ladebordwand an Kraftfahrzeugen mit einem Führungsgestänge und wenigstens zwei in diesem angeordneten hydraulischen Zylindern, bei welcher die beiden hydraulischen Zylinder über mit einem Absperrventil versehene hydraulische Leitungen mit einer Meßeinrichtung mit wenigstens einem Anzeigeinstrument verbunden sind.

FIG. 1

FIG. 4

FIG. 2

FIG. 3

**Europäisches Patentamt**

## EUROPÄISCHER RECHERCHENBERICHT

EP 81 10 0057.9

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | DE - U - 1 834 700 (MASCHINEN-TREPEL) Ansprüche 1, 2; Fig. * & FR - A - 1 306 404 -- | 1,11 | B 66 F 7/00 B 60 P 1/44 G 01 G 5/04 |
| | DE - C - 875 766 (TOUSSAINT & HESS) * Anspruch; Fig. * -- | 1,14 | |
| | DE - B - 1 549 215 (LINK) * Anspruch 1; Spalte 2, Zeilen 31 bis 36 * -- | 1 | RECHERCHIERTE SACHGEBIETE (Int. Cl.³) |
| | US - A - 2 373 469 (GRIME) * Anspruch 1; Fig. 1 * -- | 1 | B 60 P 1/44 B 60 P 5/00 B 65 G 69/00 |
| A | DE - U - 7 005 603 (FISCHER) * Ansprüche 1 bis 4 * -- | 1 | B 66 F 3/00 B 66 F 7/00 B 66 F 17/00 |
| A | DE - U - 1 617 288 (BURKHARDT et al.) * Anspruch; Fig. 5 * -- | 1 | G 01 G 5/04 |
| A | US - A - 3 910 364 (BAKER) * Anspruch 1 * -- | 1 | KATEGORIE DER GENANNTEN DOKUMENTE |
| A | US - A - 3 177 958 (LINK) * Fig. 2 * ---- | 1 | X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument &: Mitglied der gleichen Patentfamilie, übereinstimmendes Dokument |

X  Der vorliegende Recherchenbericht wurde für alle Patentansprüche erstellt.

| Recherchenort | Abschlußdatum der Recherche | Prüfer |
|---|---|---|
| Berlin | 31-03-1981 | KANAL |

EPA form 1503.1  06.78